# FASCICULE DE BREVET EUROPEEN

(11) **EP 0 341 120 B1**
(45) Date de publication et mention de la délivrance du brevet: **01.09.1993**
(21) Numéro de dépôt: 89401126.1
(22) Date de dépôt: 21.04.1989
(51) Int. Cl.: G11B 5/245, G11B 5/31, G11B 15/12, G11B 5/49

(54) **Tête d'enregistrement thermo-magnétique**
Thermomagnetischer Aufnahmekopf
Thermo-magnetic recording head

(30) Priorité: 27.04.1988 FR 8805593
(43) Date de publication de la demande: 08.11.1989
(73) Titulaire: THOMSON-CSF, 75008 Paris (FR)
(72) Inventeur: Bousquet, Philippe, F-92402 Courbevoie Cédex (FR); Lehureau, Jean-Claude, F-92402 Courbevoie Cédex (FR)
(74) Mandataire: Grynwald, Albert

(56) Documents cités:
- EP-A- 0 218 532
- GB-A- 770 127
- GB-A- 882 779
- US-A- 3 686 467
- US-A- 4 322 763
- PATENT ABSTRACTS OF JAPAN, vol. 4, no. 118 (P-24)[600], 22 août 1980, page 71 P 24;& JP-A-55 73 913
- PATENT ABSTRACTS OF JAPAN, vol. 4, no. 5 (E-165), 16 janvier 1980, page 96 E 165;& JP-A-54 146 620

## Description

L'invention est relative à une tête d'enregistrement thermomagnétique.

Pour inscrire rapidement une grande densité d'informations sur un support magnétique, notamment une bande, il est nécessaire de disposer de têtes magnétiques d'enregistrement qui soient de faible encombrement et d'une grande rapidité de réponse.

Dans le brevet français n° 85 14766 déposé le 4 octobre 1985 par la demanderesse on a déjà décrit une tête de type thermomagnétique qui satisfait à ces conditions. Cette tête comprend un substrat magnétique à température de Curie modérée, c'est-à-dire peu élevée par rapport à la température ambiante, par exemple de l'ordre de 100° C, ainsi que deux électrodes séparées par une faible distance. Lorsqu'on applique une différence de potentiel entre ces deux électrodes un courant passe dans la partie du matériau magnétique située entre les deux électrodes; le courant chauffe cette partie au-dessus du point de Curie; le matériau ainsi échauffé est alors amagnétique et constitue un entrefer, ce qui permet l'inscription d'informations sur un support magnétique.

L'invention, qui concerne aussi une tête de type thermomagnétique, permet d'améliorer dans des proportions importantes la densité d'informations qu'on peut inscrire ainsi que la rapidité d'inscription.

La tête magnétique selon l'invention est caractérisée en ce que les pièces polaires magnétiques de part et d'autre de l'entrefer constituent des conducteurs électriques transportant le courant de chauffage de cet entrefer. Le matériau des pièces polaires présente à la fois des propriétés magnétiques et de conduction d'électricité. De préférence, la température de Curie des pièces polaires est supérieure à la température de Curie du matériau de l'entrefer. il est également préférable que la résistivité du matériau de l'entrefer soit supérieure à la résistivité du matériau constituant les pièces polaires.

L'entrefer étant en un matériau distinct de celui des pièces polaires son épaisseur est limitée, ce qui permet de limiter l'étendue du domaine inscrit sur le support magnétique, et favorise donc une grande densité d'informations sur ce support. En outre quand les pièces polaires sont elles-mêmes conductrices la réalisation de la tête peut être très simple. De plus si le point de Curie des pièces polaires est élevé, on peut obtenir, à la température de fonctionnement (de l'ordre de la température de Curie du matériau d'entrefer), une grande amplitude d'aimantation de ces pièces polaires et donc une grande efficacité de l'écriture d'informations sur le support magnétique.

Le matériau constitutif des pièces polaires est par exemple un alliage de fer et de nickel connu sous la dénomination "PERMALLOY", ou un alliage de fer, de silicium et d'aluminium connu sous la dénomination "SENDUST", ou un alliage de cobalt et de zirconium. Ces pièces polaires peuvent être également en fer pur de résistivité comprise entre 10 et 100 µΩ cm. Le point de Curie de ces matériaux est compris entre environ 200 et 400°C.

La couche d'entrefer est de préférence constituée d'un oxyde de fer par exemple une ferrite de manganèse, de zinc et de lithium. L'aimantation à saturation d'un tel oxyde est comprise entre 2 000 et 5 000 Gauss à 20°C et le point de Curie entre 60°C et 150°C. La résistivité du matériau constituant l'entrefer peut être ajustée en réglant la proportion entre les ions divalents et les ions trivalents. On peut ainsi atteindre une résistivité comprise entre 0,1 et 10 Ω cm.

La tête magnétique est de préférence réalisée en couches minces, par exemple avec la technique décrite dans le brevet français 86 14974 au nom de la demanderesse qui consiste à déposer, en couches minces, sur un substrat d'abord une première pièce polaire, puis le matériau d'entrefer en une couche d'épaisseur inférieure à celle de la première couche de pièce polaire, et ensuite le matériau de la seconde pièce polaire sur la couche d'entrefer; enfin on polit la surface ainsi recouverte des trois couches de façon à dégager l'entrefer proprement dit. Cette technique permet d'obtenir un entrefer de largeur très faible et ainsi d'optimiser la densité d'informations inscrites sur le support.

D'autres caractéristiques et avantages de l'invention apparaîtront avec la description de certains de ses modes de réalisation, celle-ci étant effectuée en se référant aux dessins ci-annexés sur lesquels :
- la figure 1 est un schéma en coupe d'une tête magnétique selon l'invention,
- la figure 2 est une coupe partielle d'une tête pour une variante de la figure 1,
- les figures 3ₐ à 3_{d} illustrent un procédé de réalisation d'une tête selon la figure 1,
- la figure 4 montre un assemblage de têtes magnétiques selon l'invention, et
- la figure 5 est une vue analogue à celle de la figure 4 mais pour une variante.

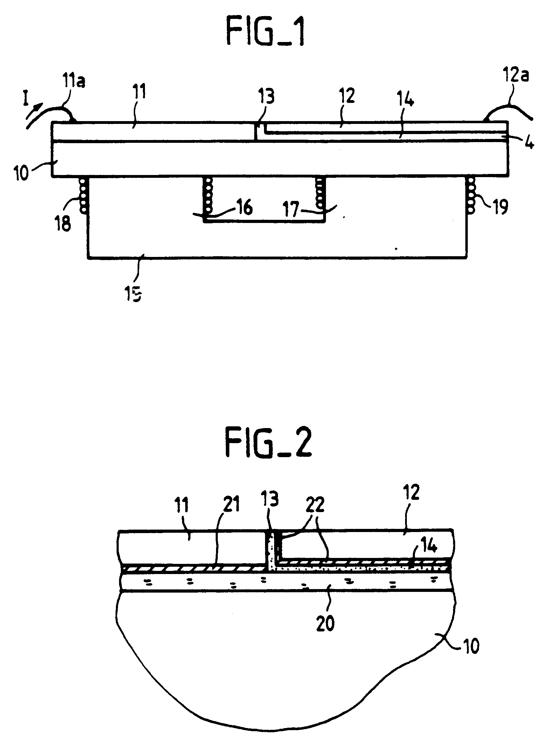

Dans l'exemple de la figure 1, le substrat 10 est en une matière amagnétique par exemple le silicium avec une épaisseur de 300 µ par exemple.

Sur ce substrat 10 les éléments principaux de la tête magnétique sont déposés en couches minces, à savoir les deux pièces polaires 11 et 12 et l'entrefer 13.

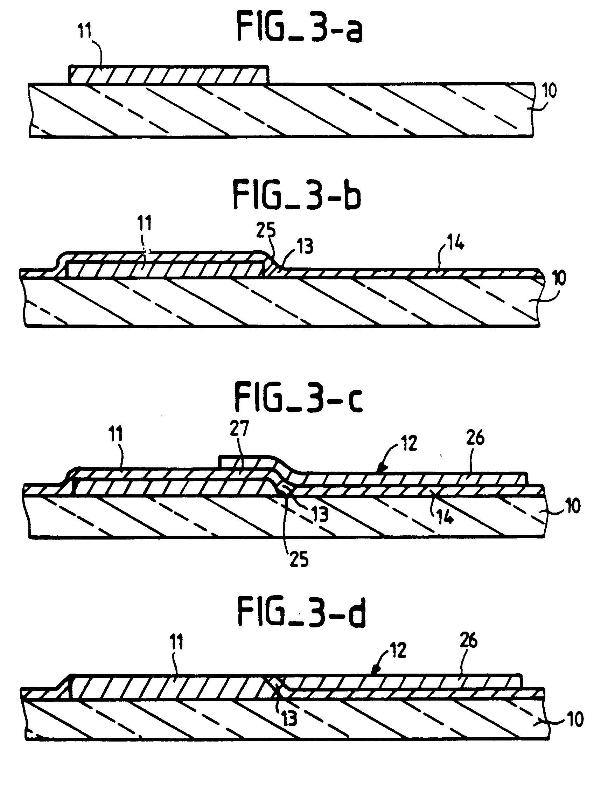

L'entrefer 13 a une épaisseur inférieure à l'épaisseur de la couche 11. Cet entrefer 13 constitue un rebord d'une couche 14 interposée entre le substrat 10 et la couche 12 formant la second pièce polaire. Cette sous-couche 14 résulte du procédé de fabrication qui sera décrit plus loin en relation avec la figure 3.

La couche 11 est liée à un conducteur électrique 11ₐ. De même la couche 12 est connectée à un autre conducteur électrique 12ₐ.

Le circuit magnétique est fermé, à l'opposé de la plaque 10, par un aimant 15 avec deux bras 16 et 17 en regard respectivement des pôles 11 et 12. Sur chacun de ces bras est bobiné un enroulement 18, 19 d'écriture ou de lecture.

Les pièces polaires 11 et 12 sont en un matériau magnétique à point de Curie élevé, supérieur à 150°C environ et qui présentent en même temps des propriétés conductrices de l'électricité. De préférence la résistivité est comprise entre 10 et 100 µ Ω cm. Pour réaliser les couches 11 et 12 on peut utiliser du "PERMALLOY" constitué d'environ 20 % de fer et de 80 % de nickel ou du "SENDUST" formé d'environ 80% de fer, 10 % de silicium et 10 % d'aluminium. On peut également faire appel à un alliage d'environ 95 % de cobalt et 5 % de zirconium. On peut aussi utiliser du fer pur.

La couche 14 est magnétique à température ambiante. Cependant son point de Curie est inférieur au point de Curie du matériau des couches 11 et 12. De préférence la température de Curie du matériau de cette couche 14 (et donc de l'entrefer 13) est comprise entre 60°C et 150°C. En outre la résistivité de cette couche 14 est supérieure à la résistivité des couches 11 et 12. Dans l'exemple cette résistitivé est comprise entre 0,1 et 10 Ω cm. Elle est constituée d'un oxyde de fer tel qu'un ferrite de manganèse, de zinc et de lithium comprenant, pour ses composants cationiques, environ 40 % de manganèse, 50 % de zinc et 10 % de lithium. L'aimantation à saturation d'un tel oxyde est de l'ordre de 2 à 5 000 Gauss à 20°C.

De toute façon la résistivité de la couche d'entrefer 13 peut être réglée par le choix des proportions entre ions divalents (Fe⁺⁺ ou Mn⁺⁺ ou Zn⁺⁺) et ions trivalents (Fe⁺⁺⁺).

Une information est inscrite à l'aide de la tête magnétique quand un courant est injecté par les conducteurs 11ₐ et 12ₐ à travers les couches 11, 13 et 12 afin d'échauffer l'entrefer 13 pour qu'il dépasse la température de Curie et qu'ainsi il perde ses propriétés magnétiques.

Avec une telle tête magnétique il n'est pas nécessaire de prévoir de moyens d'adressage des bobinages 18 et 19. De façon plus précise : pour l'inscription d'informations les bobinages peuvent être alimentés en permanence, l'écriture ne s'effectuant que lorsqu'un courant d'adressage est amené par les conducteurs 11ₐ et 12ₐ.

Pour une bonne efficacité du chauffage de l'entrefer il est préférable que le rapport entre la résistivité du matériau de la couche 13 et la résistivité du matériau des couches 11 et 12 soit supérieur à 10 000. Par ailleurs il est préférable que la résistivité du matériau de la couche 13 ne dépasse pas 10 Ω cm pour éviter les claquages. En effet pour une résistivité trop faible de la couche 13 les pôles 11 et 12 risquent de s'échauffer dans une mesure excessive. Pour une résistivité trop importante de cette couche 13, le potentiel nécessaire pour produire l'échauffement de cette couche produirait un arc, ou étincelle, électrique à travers cet entrefer, entre les pôles 11 et 12.

La variante représentée sur la figure 2 se distingue de celle de la figure 1 par le fait que sur le substrat 10 se trouve une couche 20 à propriétés d'isolation thermique et électrique et entre cette couche 20 et la couche 11 est disposée une couche métallique 21. Entre la couche 13, 14 d'entrefer et la couche 12 est également disposée une autre couche métallique 22. Le métal constituant les couches 21 et 22 est par exemple le cuivre.

Ces couches 21 et 22 améliorent la conductivité du courant amené à l'entrefer 13 pour l'échauffer. Dans une variante les couches 11 et 12 ne sont pas conductrices, le courant étant amené à l'entrefer 13 pour l'échauffer uniquement par les couches métalliques 21 et 22.

Le refroidissement de l'entrefer et des pôles 11 et 12 est d'autant plus lent que la couche 20, isolante thermiquement et électriquement, est épaisse. Autrement dit on peut régler la rapidité de réponse de la tête magnétique, notamment le temps pendant lequel chaque signal est inscrit, par le réglage de l'épaisseur de la couche 20.

Pour un champ électrique appliqué de 2 x 10⁷ volts/mètre une résistivité du ferrite constituant la couche 13 de 10⁻² Ω m, une masse spécifique de ce ferrite de 5 000 kg/m³, une capacité calorifique de ce même ferrite de 1,5 kilojoule/Kg°C le point de Curie de cette couche 13 peut être atteint en un temps de l'ordre de 20 nanosecondes à partir de la température ambiante de 20°C. Pour les pièces polaires 11 et 12 en SENDUST le refroidissement de la tête s'effectue en environ 100 nanosecondes.

Pour inscrire un point avec un entrefer de longueur 5 µ, de largeur 0,4 µ et de profondeur 0,5 µ l'énergie nécessaire est d'environ 50 picojoules. Ainsi un ensemble de têtes magnétiques destinées à enregistrer des informations à la fréquence de 1 gigabit par seconde ne nécessite pour son adressage qu'une puissance inférieure à 1 watt.

Pour réaliser la tête représentée sur la figure 1 on procède comme décrit ci-dessous en relation avec les figures 3ₐ à 3_{d} :
Sur la plaque isolante 10 on dépose d'abord la couche 11 (figure 3ₐ) ayant à la fois des propriétés magnétiques et conductrices de l'électricité.

Ensuite sur la pièce 11 ainsi formée par photogravure on dépose la couche 14 de matériau d'entrefer à propriétés magnétiques à bas point de Curie. Ce dépôt est effectué sur la partie de la plaque 10 non recouverte par la couche 11 ainsi que sur la couche 11 elle-même de façon à envelopper au moins un flanc 25 de la couche 11. La partie de la couche 14 qui joint la partie déposée directement sur la plaque 10 et la partie déposée sur la couche 11 constituera l'entrefer 13 (figure 3_{b}). L'épaisseur de la couche 14 est inférieure à celle de la couche 11.

Ensuite (figure 3_{c}) on dépose une couche 26 du même matériau que celui de la couche 11; cette couche 26, qui est destinée à former la seconde pièce polaire 12, couvre la partie de la couche 14 qui se termine par la couche d'entrefer 13, cet entrefer 13 ainsi qu'une fraction 27 de la couche 14 superposée à la couche 11.

L'entrefer 13 est dégagé (figure 3_{d}) par polissage des couches ainsi superposées, ce polissage permettant d'éliminer la partie de la couche 14 recouvrant la couche 11 ainsi que la partie de couche 26 qui se trouvait aussi au-dessus de la couche 11.

Ce procédé particulièrement simple permet d'obtenir un entrefer 13 de largeur minimisée, cette largeur étant l'épaisseur de la couche mince 14.

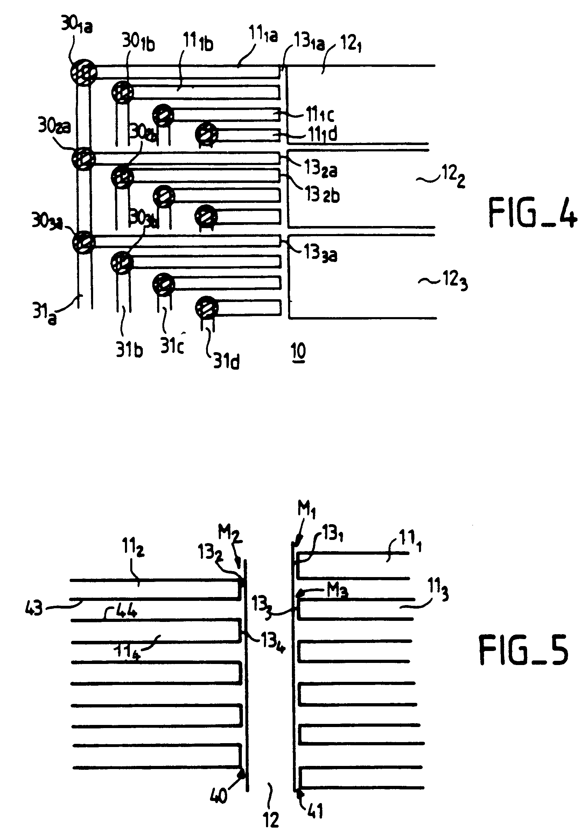

La tête magnétique que l'on vient de décrire en relation avec les figures 1 à 3 peut être utilisée dans un dispositif comprenant une multiplicité de telles têtes de façon à permettre une inscription rapide de données sur un support magnétique. Un tel dispositif est représenté sur la figure 4.

Dans cet exemple la plaque 10 est en un matériau semiconducteur tel que du silicium dans lequel sont formées des diodes 30 auxquelles sont connectés, d'une part, des conducteurs 31 d'amenée de courant et, d'autre part, des pièces polaires 11 à propriétés magnétiques et conductrices comme décrit ci-dessus.

Les pièces 11 sont perpendiculaires aux conducteurs 31 d'amenée de courant.

Le nombre de diodes 30 est égal au nombre de têtes magnétiques. Par contre le nombre de conducteurs 31 est inférieur car chaque conducteur 31 est relié à plusieurs diodes. Ainsi le conducteur 31ₐ est relié aux diodes 30₁ₐ, 30₂ₐ et 30₃ₐ. Le conducteur 31_{b}, qui a été représenté en trois parties pour la clarté du dessin, est connecté aux diodes 30_{1b}, 30_{2b} et 30_{3b}.

Les pièces polaires 12₁, 12₂, 12₃... sont communes à plusieurs têtes magnétiques, quatre dans l'exemple. Ainsi la pièce polaire 12₁ est associée aux pièces 11₁ₐ, 11_{1b}, 11_{1c} et 11_{1d}.

De cette manière on effectue un adressage de type matriciel de l'ensemble des têtes. A titre d'exemple un dispositif à 2 000 têtes est associé à vingt conducteurs 31 d'entrée et 100 pièces de sortie 12.

On peut ainsi inscrire simultanément des informations avec 100 têtes magnétiques. Par exemple quant on applique un potentiel positif sur le conducteur 31ₐ et un potentiel négatif sur toutes les couches 12, le courant passe à travers les entrefers 13₁ₐ, 13₂ₐ, 13₃ₐ , etc..., ce qui permet d'échauffer ces derniers et donc de dépasser le point de Curie.

Il est à noter que le chauffage d'un entrefer entraîne un échauffement de l'entrefer voisin par diffusion de la chaleur, par exemple par le substrat (plaque 10). Bien entendu les paramètres des divers matériaux, notamment les caractéristiques d'isolation thermique de la plaque 10, sont tels que la température de cet entrefer voisin reste au-dessous du point de Curie. Toutefois si cet entrefer immédiatement voisin avait été préalablement chauffé il subsisterait une probabilité non négligeable pour que le léger échauffement par diffusion de chaleur entraîne un chauffage de cet entrefer au-dessus du point de Curie. C'est pourquoi on n'adresse pas successivement deux têtes magnétiques voisines. Par exemple quand chaque pièce 12 est associée à cinq têtes magnétiques on fait passer un courant dans les têtes de rangs successifs suivants, et dans cet ordre : 1, 3, 5, 2, 4.

Dans une variante on se passe des diodes 30, les entrefers 13 jouant le rôle de telles diodes. A cet effet, le matériau de l'entrefer est un conducteur à coefficient de température négatif (CTN). Ainsi quand la température de l'entrefer 13 est suffisamment élevée, celui-ci est nettement plus conducteur qu'à la température ambiante. Autrement dit le courant passe alors préférentiellement dans les têtes à adresser plutôt que dans les têtes non adressées. Pour que l'entrefer ait cette propriété de conducteur CTN, celui-ci est constitué par exemple, comme décrit ci-dessus, en ferrite de manganèse, de zinc et de lithium.

Dans une autre réalisation (figure 5) les têtes magnétiques M₁, M₂, M₃ etc... sont assemblées de telle manière que l'on puisse minimiser le pas entre deux pistes voisines inscrites sur un support magnétique. A cet effet les entrefers 13₁, 13₂, 13₃, 13₄, etc... sont disposés en quinconce selon deux lignes parallèles 40 et 41. De façon plus précise les pièces polaires 11₁, 11₂, 11₃ etc... ont la largeur d'une piste à inscrire sur un support magnétique et elles sont groupées en deux ensembles de bandes parallèles, l'un à gauche de la ligne 40 et l'autre à droite de la ligne 41. Entre ces lignes 40 et 41 on prévoit une pièce polaire commune 12. Les bords parallèles les plus proches de deux bandes 11 du même ensemble, par exemple les bords 43 et 44 des bandes 11₂ et 11₄ sont séparés par une distance égale à la largeur de chaque bande. Cet intervalle entre les bords 43 et 44 est occupé, mais de l'autre côté de la pièce 12, par une bande 11₃ du second ensemble.

## Revendications

1. Tête magnétique comportant un entrefer à propriétés magnétiques à température ambiante et des moyens de chauffage pour porter le matériau de l'entrefer au-dessus de la température de Curie afin de lui faire perdre ses propriétés magnétiques, caractérisée en ce que les pièces polaires magnétiques (11, 12) de part et d'autre de l'entrefer (13) constituent des conducteurs électriques transportant le courant de chauffage de l'entrefer (13).

2. Tête magnétique présentant deux pièces polaires (11, 12) en couches minces séparées par un entrefer (13), le matériau constitutif de la couche (14') d'entrefer (13) étant un matériau magnétique à température ambiante, des moyens de chauffage étant prévus pour porter la température de l'entrefer (13) au-dessus du point de Curie, caractérisée en ce que l'entrefer (13) constitue un rebord d'une couche (14) sur laquelle est déposée l'une des pièces polaires (12), l'épaisseur de cette couche d'entrefer (14) étant inférieure à l'épaisseur de l'autre couche (11) de pièce polaire.

3. Tête magnétique selon l'une des revendications 1 ou 2, caractérisée en ce que la température de Curie du matériau des pièces polaires (11 et 12) est supérieure à la température de Curie du matériau de l'entrefer (13).

4. Tête magnétique selon la revendication 1 ou 3, caractérisée en ce que la résistivité du matériau de l'entrefer (13) est supérieure à la résistivité du matériau des pièces polaires (11, 12).

5. Tête magnétique selon la revendication 4, caractérisée en ce que le rapport entre la résistivité du matériau de l'entrefer (13) et la résistivité du matériau des pièces polaires (11, 12) est supérieur à 10 000.

6. Tête magnétique selon l'une quelconque des revendications précédentes, caractérisée en ce que la résistivité des pièces polaires (11, 12) est comprise entre 10 et 100 µ Ωcm.

7. Tête magnétique selon l'une quelconque des revendications précédentes, caractérisée en ce que la résistivité du matériau de l'entrefer est au plus de 10 Ωcm.

8. Tête magnétique selon la revendication 7, caractérisée en ce que la résistivité du matériau de l'entrefer est supérieure à 0,1Ωcm.

9. Tête magnétique selon l'une quelconque des revendications précédentes, caractérisée en ce que le matériau constitutif des pièces polaires (11, 12) est choisi dans le groupe suivant : alliage de fer et de nickel, alliage de fer, de silicium et d'aluminium, alliage de cobalt et de zirconium, et fer pur.

10. Tête magnétique selon l'une quelconque des revendications précédentes, caractérisée en ce que le matériau constitutif de l'entrefer est un oxyde de fer.

11. Tête magnétique selon la revendication 10, caractérisée en ce que le matériau constitutif de l'entrefer est un ferrite de manganèse, de zinc et de lithium.

12. Tête magnétique selon l'une quelconque des revendications précédentes, caractérisée en ce que la température de Curie du matériau de l'entrefer est comprise entre 60 et 150°C.

13. Tête magnétique selon l'une quelconque des revendications précédentes, caractérisée en ce que les pièces polaires (11, 12) et l'entrefer (13) sont déposés en couches minces sur un substrat (10).

14. Tête magnétique selon la revendication 13, caractérisée en ce que chaque pièce polaire est associée à une couche métallique conductrice (21, 22).

15. Tête magnétique selon la revendication 14, caractérisée en ce que les couches métalliques (21, 22) sont interposées entre les couches de pièces polaires (11, 12) et le substrat (10).

16. Tête magnétique selon l'une quelconque des revendications 13 à 15, caractérisée en ce qu'une couche électriquement isolante et thermiquement isolante (20) est interposée entre le substrat (10) et les couches de pièces polaires (11, 12) et d'entrefer (13).

17. Tête magnétique selon l'une quelconque des revendications 13 à 16, caractérisée en ce que la couche d'entrefer (13) constitue le rebord d'une couche (14) d'épaisseur inférieure à une couche de pièce polaire (11) adjacente et sur laquelle est déposée la seconde pièce polaire (12).

18. Tête magnétique selon l'une quelconque des revendications précédentes, caractérisée en ce que le matériau constitutif de l'entrefer (13) présente une résistivité qui s'abaisse lorsque la température augmente de façon à présenter une caractéristique de résistance négative (CTN).

19. Tête magnétique selon la revendication 18, caractérisée en ce que le matériau de l'entrefer (13) est un oxyde de fer, notamment un ferrite de manganèse, de zinc et de lithium.

20. Tête magnétique selon l'une quelconque des revendications précédentes, caractérisée en ce que la température de Curie des pièces polaires (11, 12) est comprise entre 200 et 400°C.

21. Dispositif comprenant une pluralité de têtes magnétiques selon l'une quelconque des revendications précédentes, caractérisé en ce que les entrefers (13) sont disposés selon une ligne et en ce que des moyens sont prévus pour échauffer de façon séquentielle les têtes par groupes de plusieurs élements, la séquence étant telle que deux têtes voisines ne soient pas échauffées successivement.

22. Dispositif comprenant une pluralité de têtes magnétiques selon l'une quelconque des revendications 1 à 20, caractérisé en ce que ces têtes magnétiques (M₁, M₂, M₃) comprennent une pièce polaire commune (12) de chaque côté de laquelle sont disposées en quinconce les secondes pièces polaires (11₁, 11₂, 11₃, 11₄) des diverses têtes, des secondes pièces (11₁, 11₃) étant disposées d'un côté (41) de la pièce polaire commune (12) et espacées sensiblement par une largeur de seconde pièce polaire ; d'autres secondes pièces polaires (11₂, 11₄) étant disposées de l'autre côté (40) de la pièce polaire commune (12) en vis-à-vis des espaces existant entre les secondes pièces polaires (11₁, 11₃) situées de l'autre côté (41) de la pièce polaire commune (12).

23. Dispositif selon la revendication 22, caractérisé en ce que les secondes pièces polaires des têtes sont sous forme de bandes parallèles de même largeur, les bandes situées d'un même côté de la pièce polaire commune étant séparées par un intervalle de largeur égale à la largeur de chaque bande.

24. Tête magnétique selon la revendication 2, caractérisé en ce que les pièces polaires (11, 12) présentent des propriétés conductrices de l'électricité et permettent de transporter un courant de chauffage de l'entrefer (13).

25. Dispositif selon la revendication 21, caractérisé en ce qu'il comporte des premières pièces polaires (12₁, 12₂, 12₃) communes chacune à un ensemble de secondes pièces polaires (13₁ₐ, 13₂ₐ, 13₃ₐ), les moyens pour échauffer de façon séquentielle les têtes permettant de commander à chaque séquence une seconde pièce polaire de chaque ensemble de secondes pièces polaires.

## Claims

1. Magnetic head comprising a head gap with magnetic properties at room temperature and means of heating in order to take the head gap material above the Curie temperature so as to cause it to lose its magnetic properties, characterised in that the magnetic pole pieces (11, 12) on both sides of the head gap (13) consist of electrical conductors carrying the current for heating the head gap (13).

2. Magnetic head with two pole pieces (11, 12) in thin layers separated by a head gap (13), the material forming the layer (14') of the head gap (13) being a magnetic material at room temperature, means of heating being provided to raise the temperature of the head gap (13) above the Curie point, characterised in that the head gap (13) forms a flange of a layer (14) on which is deposited one of the pole pieces (12), the thickness of this head gap layer (14) being less than the thickness of the other pole piece layer (11).

3. Magnetic head according to one of Claims 1 or 2, characterised in that the Curie temperature of the material of the pole pieces (11 and 12) is higher than the Curie temperature of the material of the head gap (13).

4. Magnetic head according to Claim 1 or 3, characterised in that the resistivity of the material of the head gap (13) is greater than the resistivity of the material of the pole pieces (11, 12).

5. Magnetic head according to Claim 4, characterised in that the ratio between the resistivity of the material of the head gap (13) and the resistivity of the material of the pole pieces (11, 12) is greater than 10,000.

6. Magnetic head according to any one of the preceding claims, characterised in that the resistivity of the pole pieces (11, 12) lies between 10 and 100 µΩ cm.

7. Magnetic head according to any one of the preceding claims, characterised in that the resistivity of the material of the head gap is at most 10 Ω cm.

8. Magnetic head according to Claim 7, characterised in that the resistivity of the material of the head gap is greater than 0.1 Ω cm.

9. Magnetic head according to any one of the preceding claims, characterised in that the material forming the pole pieces (11, 12) is chosen from the following group: alloy of iron and nickel, alloy of iron, silicon and aluminium, alloy of cobalt and zirconium, and pure iron.

10. Magnetic head according to any one of the preceding claims, characterised in that the material forming the head gap is an iron oxide.

11. Magnetic head according to Claim 10, characterised in that the material forming the head gap is a ferrite of manganese, zinc and lithium.

12. Magnetic head according to any one of the preceding claims, characterised in that the Curie temperature of the material forming the head gap lies between 60 and 150°C.

13. Magnetic head according to any one of the preceding claims, characterised in that the pole pieces (11, 12) and the head gap (13) are deposited in thin layers on a substrate (10).

14. Magnetic head according to Claim 13, characterised in that each pole piece is associated with a conducting metallic layer (21, 22).

15. Magnetic head according to Claim 14, characterised in that the metallic layers (21, 22) are interposed between the layers of the pole pieces (11, 12) and the substrate (10).

16. Magnetic head according to any one of Claims 13 to 15, characterised in that an electrically and thermally insulating layer (20) is interposed between the substrate (10) and the layers of the pole pieces (11, 12) and the head gap (13).

17. Magnetic head according to any one of Claims 13 to 16, characterised in that the head gap layer (13) forms the flange of a layer (14) which has a thickness less than an adjacent pole piece layer (11) and on which is deposited the second pole piece (12).

18. Magnetic head according to any one of the preceding claims, characterised in that the material forming the head gap (13) has a resistivity which decreases as the temperature rises in such a way as to have a negative temperature characteristic (NTC).

19. Magnetic head according to Claim 18, characterised in that the material of the head gap (13) is an iron oxide, particularly a ferrite of manganese, zinc and lithium.

20. Magnetic head according to any one of the preceding claims, characterized in that the Curie temperature of the pole pieces (11, 12) lies between 200 and 400°C.

21. Device comprising a plurality of magnetic heads according to any one of the preceding claims, characterised in that the head gaps (13) are arranged along a line and in that means are provided for sequentially heating the heads in groups of several elements, the sequence being such that two neighbouring heads are not heated successively.

22. Device comprising a plurality of magnetic heads according to any one of Claims 1 to 20, characterized in that these magnetic heads (M₁, M₂, M₃) comprise a common pole piece (12) on each side of which the second pole pieces (11₁, 11₂, 11₃, 11₄) of the various heads are arranged in a staggered fashion, some second pieces (11₁, 11₃) being arranged on one side (41) of the common pole piece (12) and separated substantially by one second pole piece width; other second pole pieces (11₂, 11₄) being arranged on the other side (40) of the common pole piece (12) opposite the spaces existing between the second pole pieces (11₁, 11₃) situated on the other side (41) of the common pole piece (12).

23. Device according to Claim 22, characterised in that the second pole pieces of the heads are in the form of parallel bands of the same width, the bands situated on the same side of the common pole piece being separated by a gap of width equal to the width of each band.

24. Magnetic head according to Claim 2, characterised in that the pole pieces (11, 12) have electrically conducting properties and allow the transport of a heating current for the head gap (13).

25. Device according to Claim 21, characterised in that it comprises first pole pieces (12₁, 12₂, 12₃) each common to a set of second pole pieces (13₁ₐ, 13₂ₐ, 13₃ₐ), the means for sequentially heating the heads making it possible to control at each sequence one second pole piece of each set of second pole pieces.

## Patentansprüche

1. Magnetkopf mit einem Spalt mit magnetischen Eigenschaften bei Umgebungstemperatur und mit Heizmitteln, um das Material des Spaltes über die Curie-Temperatur zu bringen, um dafür zu sorgen, daß dieses seine magnetischen Eigenschaften verliert, dadurch gekennzeichnet, daß die Magnetpolstücke (11, 12) beiderseits des Spaltes (13) elektrische Leiter bilden, die den Heizstrom des Spaltes (13) führen.

2. Magnetkopf mit zwei Polstücken (11, 12) aus dünnen Schichten, die durch einen Spalt (13) voneinander getrennt sind, wobei das die Schicht (14') des Spaltes (13) bildende Material ein Material ist, das bei Umgebungstemperatur magnetisch ist, und wobei Heizmittel vorgesehen sind, um die Temperatur des Spaltes (13) über den Curie-Punkt zu bringen, dadurch gekennzeichnet, daß der Spalt (13) einen Rand einer Schicht (14) bildet, auf der das eine der Polstücke (12) angeordnet ist, wobei die Dicke dieser Spaltschicht (14) kleiner als die Dicke der anderen Polstückschicht (11) ist.

3. Magnetkopf nach einem der Ansprüche 1 oder 2, dadurch gekennzeichnet, daß die Curie-Temperatur des Materials der Polstücke (11 und 12) über der Curie-Temperatur des Materials des Spaltes (13) liegt.

4. Magnetkopf nach Anspruch 1 oder 3, dadurch gekennzeichnet, daß der spezifische Widerstand des Materials des Spaltes (13) größer als der spezifische Widerstand des Materials der Polstücke (11, 12) ist.

5. Magnetkopf nach Anspruch 4, dadurch gekennzeichnet, daß das Verhältnis zwischen dem spezifischen Widerstand des Materials des Spaltes (13) und dem spezifischen Widerstand des Materials der Polstücke (11, 13) größer als 10.000 ist.

6. Magnetkopf nach einem der vorhergehenden Ansprüche, dadurch gekennzeichnet, daß der spezifische Widerstand der Polstücke (11, 12) zwischen 10 und 100 µ Ωcm liegt.

7. Magnetkopf nach einem der vorhergehenden Ansprüche, dadurch gekennzeichnet, daß der spezifische Widerstand des Materials des Spaltes größer als 10 Ωcm ist.

8. Magnetkopf nach Anspruch 7, dadurch gekennzeichnet, daß der spezifische Widerstand des Materials des Spaltes größer als 0,1 Ωcm ist.

9. Magnetkopf nach einem der vorhergehenden Ansprüche, dadurch gekennzeichnet, daß das Grundmaterial der Polstücke (11, 12) aus der folgenden Gruppe ausgewählt ist: Legierung aus Eisen und Nickel, Legierung aus Eisen, Silizium und Aluminium, Legierung aus Kobalt und Zirkon, und reines Eisen.

10. Magnetkopf nach einem der vorhergehenden Ansprüche, dadurch gekennzeichnet, daß das Grundmaterial des Spaltes ein Eisenoxid ist.

11. Magnetkopf nach Anspruch 10, dadurch gekennzeichnet, daß das Grundmaterial des Spaltes ein Mangan-, Zink- oder Lithiumferrit ist.

12. Magnetkopf nach einem der vorhergehenden Ansprüche, dadurch gekennzeichnet, daß die Curie-Temperatur des Materials des Spaltes zwischen 60 und 150°C liegt.

13. Magnetkopf nach einem der vorhergehenden Ansprüche, dadurch gekennzeichnet, daß die Polstücke (11, 12) und der Spalt (13) in dünnen Schichten auf einem Substrat (10) angeordnet sind.

14. Magnetkopf nach Anspruch 13, dadurch gekennzeichnet, daß jedes Polstück einer leitenden Metallschicht (21, 22) zugeordnet ist.

15. Magnetkopf nach Anspruch 14, dadurch gekennzeichnet, daß die Metallschichten (21, 22) zwischen die Polstückschichten (11, 12) und das Substrat (10) geschaltet sind.

16. Magnetkopf nach einem der Ansprüche 13 bis 15, dadurch gekennzeichnet, daß eine elektrisch isolierende und thermisch isolierende Schicht (20) zwischen das Substrat (10) und die Polstück- und Spaltschichten (11, 12, 13) geschaltet sind.

17. Magnetkopf nach einem der Ansprüche 13 bis 16, dadurch gekennzeichnet, daß die Spaltschicht (13) den Rand einer Schicht (14) mit einer Dicke bildet, die geringer als eine angrenzende Polstückschicht (11) ist und auf der der zweite Polteil (12) angeordnet ist.

18. Magnetkopf nach einem der vorhergehenden Ansprüche, dadurch gekennzeichnet, daß das Grundmaterial des Spaltes (13) einen spezifischen Widerstand aufweist, der sich verringert, wenn die Temperatur zunimmt, um eine negative Widerstandscharakteristik zu zeigen (CTN).

19. Magnetkopf nach Anspruch 18, dadurch gekennzeichnet, daß das Material des Spaltes (13) aus einem Eisenoxid, insbesondere aus einem Mangan-, Zink- oder Lithiumferrit besteht.

20. Magnetkopf nach einem der vorhergehenden Ansprüche, dadurch gekennzeichnet, daß die Curie-Temperatur der Polstücke (11, 12) zwischen 200 und 400°C liegt.

21. Vorrichtung mit einer Vielzahl von Magnetköpfen nach einem der vorhergehenden Ansprüche, dadurch gekennzeichnet, daß die Spalte (13) in einer Reihe angeordnet sind und daß Mittel vorgesehen sind, um die Köpfe in Gruppen von mehreren Elementen sequentiell zu erhitzen, wobei die Sequenz so ist, daß zwei benachbarte Köpfe nicht aufeinanderfolgend erhitzt werden.

22. Vorrichtung mit einer Vielzahl von Magnetköpfen nach einem der Ansprüche 1 bis 20, dadurch gekennzeichnet, daß diese Magnetköpfe (M₁, M₂, M₃) ein gemeinsames Polstück (12) enthalten, auf dessen beiden Seiten versetzt die zweiten Polstücke (11₁, 11₂, 11₃, 11₄) der verschiedenen Köpfe angeordnet sind, wobei zweite Stücke (11₁, 11₃) auf einer Seite (41) des gemeinsamen Polstücks (12) angeordnet sind und im wesentlichen einen Abstand von einer Breite des zweiten Polstücks voneinander aufweisen, und wobei weitere zweite Polstücke (11₂, 11₄) auf der anderen Seite (40) des gemeinsamen Polstücks (12) gegenüber Zwischenräumen angeordnet sind, die zwischen den zweiten Polstücken (11₁, 11₃) liegen, die auf der anderen Seite (41) des gemeinsamen Polstücks (12) angeordnet sind.

23. Vorrichtung nach Anspruch 22, dadurch gekennzeichnet, daß die zweiten Polstücke der Köpfe in der Form von parallelen Streifen gleicher Breite vorliegen, wobei die Streifen, die auf einer gleichen Seite des gemeinsamen Polstücks angeordnet sind, durch einen Zwischenraum gleicher Breite wie die Breite eines jeden Streifens voneinander getrennt sind.

24. Magnetkopf nach Anspruch 2, dadurch gekennzeichnet, daß die Polstücke (11, 12) elektrische Leitereigenschaften aufweisen und es ermöglichen, einen Heizstrom des Spaltes (13) zu führen.

25. Vorrichtung nach Anspruch 21, dadurch gekennzeichnet, daß sie erste Polstücke (12₁, 12₂, 12₃) enthält, die jeweils einer Einheit von zweiten Polstücken (13₁ₐ, 13₂ₐ, 13₃ₐ) gemein sind, wobei es die Mittel zum sequentiellen Erhitzen der Köpfe ermöglichen, bei jeder Sequenz ein zweites Polstück einer jeweiligen Einheit von zweiten Polstücken zu steuern.
